# EUROPEAN PATENT APPLICATION

(11) **EP 2 719 928 A1**
(43) Date of publication of application: **16.04.2014**
(21) Application number: 12796188.6
(22) Date of filing: 07.06.2012
(51) Int. Cl.: F16J 15/10, C08K 3/00, C08K 7/04, C08L 21/00, C08L 77/06, C09K 3/10, F16J 15/20

(54) **SEAL RING**

(30) Priority: 09.06.2011 JP 2011129634
(71) Applicant: Kabushiki Kaisha Riken, Chiyoda-ku Tokyo 102-8202 (JP)
(72) Inventor: SAITO, Mika, Kashiwazaki-shi, Niigata 9458555 (JP)
(74) Representative: Hooiveld, Arjen Jan Winfried
(86) International application number: PCT/JP2012/064728
(87) International publication number: WO 2012/169604

(57) **Abstract**

The objective of the present invention is to provide a seal ring having excellent dimensional stability and fitting properties with an opposing member, is able to effectively prevent leakage of oil even at very low hydraulic pressure, and also having excellent sliding properties. The seal ring is produced from a resin composition comprising (A) a poly(phthalamide) and (B) at least one component selected from among elastomers, crosslinked rubbers and dynamically crosslinked resins. There may further be added to the resin composition (C) at least one filler selected from among carbon fibers, glass fibers, alumina fibers, potassium titanate fibers, boron fibers, silicon carbide fibers, carbon nanotubes, montmorillonite, bentonite, talc, isinglass, mica, molybdenum disulfide, glass beads, graphite, fullerene, anthracite powder, aluminum oxide, titanium oxide, magnesium oxide, potassium titanate, boron nitride and PTFE powder.

## Description

### Technical Field

The present invention relates to a seal ring, and more specifically it relates to a seal ring which is to be installed in an automatic transmission (hereunder, "AT") for a vehicle or the like.

### Background Art

In an AT, seal rings are installed in two ring grooves provided at spaced locations on the peripheral surface of a rotating shaft. The peripheral surface of each seal ring slides on the inner peripheral surface of a housing that houses a clutch disc or brake disc, and hydraulic oil (Automatic Transmission Fluid, hereunder "ATF") supplied from an oil passage provided between the two ring grooves is received at one pressure receiving side and at the inner peripheral surface of both seal rings, and a seal is created between the side of the ring groove and the inner peripheral surface of the housing, by the opposite contact side and peripheral surface.
In recent years, with increasing demand for lower fuel consumption and lower cost for vehicles, it has been a goal to achieve even lower friction, higher seal performance and lower cost for AT seal rings as well. In order to achieve low friction, it is considered effective to not only employ a material with a low friction coefficient in the oil, but to also employ a seal ring shape that facilitates formation of an oil film. Thus, materials for seal rings are preferably resin materials with excellent moldability, suitable for injection molding.
In addition, in order to reduce energy loss due to oil leakage during vehicle start-up, it has been a goal to obtain materials with excellent sealing properties that can prevent leakage of ATF even under extremely low oil pressure. Furthermore, as an aspect of weight reduction of automobile parts in recent years, the AT rotating shafts and housings are also shifting from iron-based materials to aluminum alloy materials. Consequently, it is desirable for seal rings to be constructed of materials that are compatible with aluminum alloy materials.

Rotating shafts and housings made of iron-based materials used in the past have included cast iron or polytetrafluoroethylene (hereunder, "PTFE") seal rings. However, with the shift toward aluminum alloy materials for rotating shafts and housings, polyimide ("PI"), polyether ether ketone ("PEEK"), polyamideimide ("PAI") and polyphenylene sulfide ("PPS"), which are more compatible with aluminum alloys than PTFE, have come to be employed for seal ring materials.
Seal rings having fibrous fillers and the like added to such resin materials have excellent heat resistance and sliding properties, but many resin compositions have been proposed for even higher performance. For example, Patent Literature 1 proposes, as a sliding material, a resin composition comprising PPS resin as a typical polyarylene sulfide ("PAS") resin, a thermoplastic elastomer, an aromatic maleimide and molybdenum disulfide, etc. With the resin composition of Patent Literature 1, satisfactory impact resistance, elongation and flexibility, as well as excellent sliding properties, are exhibited, without impairment of the original mechanical properties, heat resistance, chemical resistance and electrical insulating properties of the PAS resin.
In Patent Literature 2, there is disclosed a resin composition comprising a polyamide ("PA") resin and a rubber or elastomer having a weighted mean particle size of 1 to 500 nm. It is stated that the resin material can be suitably used as a sliding section material because of its excellent mechanical properties and sliding properties such as frictional properties and wear properties.

With the material of Patent Literature 1, addition of an elastomer improves the brittleness of PPS, thereby resulting in excellent mechanical properties and sliding properties when it is applied to a seal ring. However, because PPS is a hard material there is a limit to its fitting properties (adhesiveness) with counterpart materials, and it is difficult to prevent leakage of ATF under extreme low oil pressure. By increasing the amount of elastomer addition and imparting flexibility to the resin material, it is possible to increase the fitting properties. However, adding large amounts of elastomer results in problems such as lowering material strength and generating gas due to thermal decomposition of the elastomer during mixing and molding, and there has therefore been a limit to the amount of addition. In addition, with a seal ring composed of the hard material described in Patent Literature 1, jamming caused by foreign matter (contaminants) such as shaving powder present in oil can potentially cause aggressive wear.
On the other hand, the material of Patent Literature 2 is based on flexible polyamide ("PA"), and therefore has excellent fitting properties with counterpart materials, and has the potential to exhibit excellent sealing properties under extreme low oil pressure. Furthermore, engulfment of foreign matter such as shaving powder in oil by a flexible seal ring material can presumably prevent generation of aggressive wear. In addition, since PA is self-lubricating, it also has excellent sliding properties. However, because PA-materials generally have higher water absorbing properties and greater volume expansion by water absorption compared to PPS and PEEK, etc., it has been difficult to apply them to seal rings for ATs, which require rigid dimensional precision.

### Prior art literature

### Patent Literature

Patent Literature 1: Japanese Unexamined Patent Application Publication No. 06-80875
Patent Literature 2: Japanese Unexamined Patent Application Publication No. 2007-119581

### Summary of Invention

### Technical Problem

The present invention has been accomplished in light of the circumstances described above, and its object is to provide a seal ring having excellent dimensional stability and fitting properties with counterpart materials, capable of effectively preventing leakage of oil even under extreme low oil pressure, and also having excellent sliding properties.

### Solution to Problem

As a result of diligent research directed toward achieving this object, the present inventors have found that a resin composition comprising (A) a poly(phthalamide) (hereunder referred to as "PPA") and (B) at least one component from among elastomers, crosslinked rubbers and dynamically crosslinked resins (hereunder referred to as "elastomers and the like"), has low water absorbing properties and excellent dimensional stability, while being flexible and having excellent fitting properties with counterpart materials, as well as a low friction coefficient in oil, and that a seal ring composed of the resin composition can therefore realize high sealing performance and low friction, and the present invention has thereupon been completed. In other words, the seal ring of the invention is made of a resin composition comprising (A) a poly(phthalamide) and (B) at least one component from among elastomers, crosslinked rubbers and dynamically crosslinked resins.

### Advantageous Effects of Invention

The seal ring of the invention which contains PPA and an elastomer or the like, has low water absorbing properties and can therefore provide excellent dimensional stability. In addition, since the seal ring of the invention is made of a flexible material, it has excellent fitting properties with counterpart materials, closely bonds with counterpart materials even under low oil pressure, and can effectively prevent leakage of oil even under extreme low oil pressure. When installed in an AT, therefore, it can minimize energy loss during start-up. In addition, since the seal ring of the invention contains PPA which has self-lubricating properties and has a low friction coefficient µ in oil, it is possible to obtain excellent sliding properties. Furthermore, with the seal ring of the invention, engulfment of foreign matter such as shaving powder in oil by a flexible seal ring material prevents generation of aggressive wear, and reduces wear of counterpart materials.

### Brief Description of Drawings

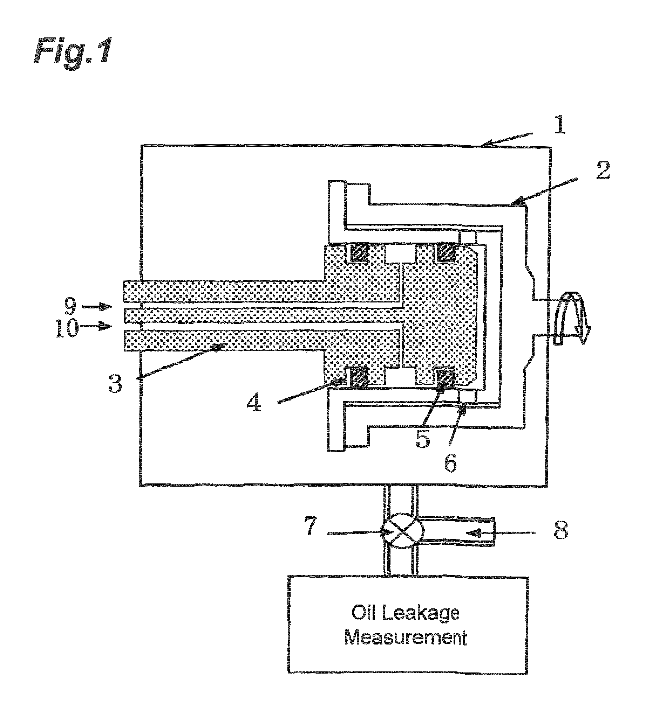

Fig. 1 is a schematic diagram showing an apparatus for measuring friction and oil leakage.

### Description of Embodiments

The seal ring of the invention will now be explained in greater detail.

The seal ring of the invention is composed of a mixture containing PPA and an elastomer or the like. According to the invention, the method of mixing the PPA and the elastomer or the like is not particularly restricted but is preferably mechanical mixing, from the viewpoint of productivity. Mechanical mixing is generally carried out by melt mixing using a powerful mixer such as a mixing roll or extruder. According to the invention, a polymer alloy obtained by such a method is preferably used.

The mixing ratio (mass) of the PPA and the elastomers and the like in the seal ring of the invention is preferably between 2:8 and 8:2, from the viewpoint of hardness and elastic modulus of the resin material. If the mixing ratio of the PPA and the elastomer or the like is within this range, it will be possible to obtain a resin material having excellent fitting properties with counterpart materials and low water absorbing properties, so that the sealing properties of the seal ring under extreme low oil pressure will be further improved. The mixing ratio of the PPA and the elastomer or the like is more preferably between 7:3 and 5:5.

The PPA to be used for the invention may be polyhexamethylene isophthalamide (nylon 6I), polyhexamethylene terephthalamide (nylon 6T), polyhexamethylene terephthalamide/polyhexamethylene isophthalamide copolymer(nylon 6T/6I), polycapramide/polyhexamethylene terephthalamide copolymer(nylon 6/6T), polycapramide/polyhexamethylene isophthalamide copolymer(nylon 6/6I), polyhexamethylene adipamide/polyhexamethylene terephthalamide copolymer(nylon 66/6T), polyhexamethylene adipamide/polyhexamethylene isophthalamide copolymer(nylon 66/6I), polytrimethylhexamethylene terephthalamide (nylonTMDT), polynonamethylene terephthalamide (nylon 9T), polyundecamethylene terephthalamide (nylon 11T), poly(2-methylpentamethylene) terephthalamide (nylonM5T), poly(2-methylpentamethylene) isophthalamide (nylonM5I), polyhexamethylene terephthalamide/poly-2-methylpentamethylene terephthalamide copolymer (nylon 6T/M5T), or the like. Any of these PPAs may be used alone, or two or more thereof may be used in combination.
Of the aforementioned PPAs, nylon 9T is preferred from the viewpoint of low water absorbing properties, and nylon 6T/6I and nylon 6T/M5T are preferred from the viewpoint of sliding properties.
Commercially available PPA products include AMODEL Poly(phthalamide) (ET-1001) by SOLVAY Advanced Polymers, ZYTEL (HTN FE18502) by DuPont Corp., GENESTAR (N1001A) by Kuraray Co., Ltd. and AREN (AE4200) by Mitsui Chemicals, Inc.

The seal ring of the invention may be obtained by mixing the PPA with at least one component from among elastomers, crosslinked rubbers and dynamically crosslinked resins. The elastomer to be used for the invention is not particularly restricted, but preferably one of the following thermoplastic elastomers is used. The melting point of the elastomer is preferably close to the melting point of the PPA to be mixed therewith, and preferably it is 200°C or higher. Also, the decomposition temperature is preferably 320°C or higher, the Vicat softening temperature is preferably 125°C or higher, the surface hardness (Durometer hardness A) is preferably no greater than 80 and the elastic modulus is preferably no greater than 300 MPa. By using such a thermoplastic elastomer, it is possible to obtain a polymer alloy that is flexible and has excellent sliding properties, without loss of thermal properties even after mixing.
Thermoplastic elastomers include polyester-based elastomers, polyolefin-based elastomers, fluorine-based elastomers, silicone-based elastomers, butadiene-based elastomers, polyamide-based elastomers, polystyrene-based elastomers and urethane-based elastomers. These elastomers may be used alone or in mixtures of two or more. Preferred among the aforementioned elastomers are polyester-based elastomers and polyamide-based elastomers, for their excellent injection moldability and heat resistance.
Commercial polyester-based elastomer products include HYTREL by Toray-DuPont Co., Ltd., PELPRENE by Toyobo, Ltd. and PRIMALLOY by Mitsubishi Chemical Corp., and commercial polyamide-based elastomer products include PEBAX by ARKEMA and UBESTAXPA by Ube Industries, Ltd.

A crosslinked rubber component may also be added either instead of the elastomer or together with the elastomer. Crosslinked rubber components include natural rubber, synthetic isoprene rubber (IR), fluorine rubber, butadiene rubber (BR), styrene-butadiene rubber (SBR), chloroprene rubber (CR), acrylonitrile-butadiene copolymer rubber (NBR), butyl rubber (IIR), butyl halide rubber, urethane rubber and silicone rubber. These crosslinked rubber components may be used alone or in mixtures of two or more.

A dynamically crosslinked resin may also be added, either instead of the elastomer and crosslinked rubber or together with the elastomer and crosslinked rubber. A dynamically crosslinked resin has a structure with a crosslinked rubber phase dispersed in a thermoplastic resin phase. The thermoplastic resin to be used in the dynamically crosslinked resin is not particularly restricted, and polyesters and polyamides (PA) may be mentioned. The rubber is also not particularly restricted, and examples include natural rubber, cis-1,4-polyisoprene, high-cis polybutadiene, styrene-butadiene copolymer rubber, ethylene-propylene rubber (EPM), ethylene-propylene diene rubber (EPDM), chloroprene rubber, butyl rubber, butyl halide rubber, acrylonitrile-butadiene copolymer rubber, acrylic rubber, and the like.
The dynamically crosslinked resin may be produced by a known method. For example, a crosslinking agent may be pre-mixed with a non-crosslinked rubber component and the thermoplastic resin component and the non-crosslinked rubber component melt kneaded using a twin-screw extruder, to simultaneously accomplish dispersion and crosslinking of the rubber component. Such a dynamically crosslinked resin may be acquired as a commercial product. For example, commercial dynamically crosslinked resins having acrylic rubber dispersed in a polyester resin include ETPV by DuPont Corp. and NOFALLOY by NOF Corp. Also, commercial dynamically crosslinked resins having acrylic rubber dispersed in a polyamide resin include ZEOTHERM by Zeon Corp.

To the resin composition composing the seal ring of the invention there is preferably added a fibrous inorganic filler such as carbon fibers, glass fibers, alumina fibers, potassium titanate fibers, boron fibers or silicon carbide fibers, as an inorganic filler. Addition of a fibrous inorganic filler can improve the wear resistance, mechanical strength and creep resistance of the seal ring and provide excellent sealing properties, allowing use even in high PV value ranges. Preferred among these fibrous inorganic fillers are carbon fibers and glass fibers, with PAN-based carbon fibers and pitch-based carbon fibers being preferred as carbon fibers. The mean fiber lengths of these fibrous inorganic fillers are preferably 50 µm to 500 µm and more preferably 100 to 300 µm.
Also, carbon nanotubes not only function as a fibrous inorganic filler exhibiting a reinforcing function, but are also effective as a filler for improving sliding properties, as explained below.

According to the invention, another particulate filler may be added, either instead of the fibrous inorganic filler or together with the fibrous inorganic filler, in order to improve the wear resistance or sliding properties. Other fillers include montmorillonite, bentonite, talc, isinglass, mica, molybdenum disulfide, glass beads, graphite, fullerene, anthracite powder, aluminum oxide, titanium oxide, magnesium oxide, potassium titanate, boron nitride and PTFE powder. Among these, molybdenum disulfide, graphite, boron nitride and PTFE powder are effective as fillers that impart lubricity, and addition of such fillers can provide excellent sliding properties even under harsh use conditions.
The mean particle size of the particulate filler is preferably no greater than 40 µm, and more preferably 10 to 30 µm. Fine particles with mean particle sizes of the submicron order, and macroparticles with mean particle sizes of 100 µm and greater, can potentially cause brittleness of the material, in which case they are preferably removed from the particulate filler.
The total amount of addition of the filler is preferably 10 mass% to 50 mass% with respect to the total mass of the resin composition composing the seal ring. Addition of a filler in this range can result in excellent mechanical strength and sliding properties, and can maintain more excellent sealing properties for prolonged periods.

The surface hardness of the seal ring of the invention is preferably in the range of 60 to 75, as the durometer hardness measured by the method described below. By limiting the surface hardness of the seal ring to within this range, even if contaminants such as shaving powder are present in the oil, the contaminants can be engulfed to the interior of the seal ring material. It is thus possible to effectively prevent generation of aggressive wear, and to significantly reduce wear of counterpart materials. In addition, a surface hardness in this range provides sufficient elasticity, and thus satisfactory assembling properties.

The method for mixing the materials is not particularly restricted, and a known method may be used. For example, it may be hot melt kneading using a single-screw extruder, twin-screw extruder, roll, kneader, Banbury mixer or the like.
In consideration of mountability, the seal ring of the invention is preferably provided with an abutment joint. The shape of the abutment joint is not particularly restricted, and there may be employed a right angle (straight) abutment joint, an oblique (angle) abutment joint or a stepped abutment joint, or a double angle abutment joint, double cut abutment joint or triple step abutment joint. In order to block distribution of oil through the abutment joint gap and increase the sealing property, a double angle abutment joint, double cut abutment joint or triple step abutment joint is preferred.

### Examples

Although the invention will be further explained with the following examples, the invention is not limited to these examples.

### (Examples 1 to 5)

PPA and elastomers and the like were charged into an extruder in the mixing proportions listed in Table 1, and mixed under conditions with a temperature of 320°C, a screw rotational speed of 100 rpm, and a powder supply rotational speed of 65 rpm, to obtain pellets. The diameters of the obtained pellets were approximately 3 mm, and the lengths were 3 to 4 mm. Next, the pellets and the filler with the mixing proportion listed in Table 1 were charged into an extruder and mixed under conditions with a temperature of 320°C, a screw rotational speed of 50 rpm, and a powder supply rotational speed of 65 rpm, to obtain composite resin pellets. The PPA, elastomer and filler used were the following commercial products.
The obtained composite pellets were injection molded to prepare different measuring samples. For surface hardness measurement there was produced a dumbbell test piece (JIS-K7113 No. 2-type test piece), and for measurement of the impact value and flexural modulus there was produced a strip test piece (ISO178, 179, 80 × 10 × 4 mm). Also, for measurement of the friction coefficient µ in oil, the oil leakage under extreme low oil pressure and the extent of wear, there was produced a ring-shaped test piece having a special step abutment joint with a nominal diameter (outer diameter) of 50.0 mm, a width of 2.0 mm and a thickness of 2.0 mm. The die temperature during injection molding was 150°C, the molding temperature was 310°C to 330°C, and the injection speed was 50 mm/sec. Also, the molding pressure was 75 MPa for the ring-shaped test piece, and 110 MPa for the dumbbell test piece and strip test piece. The methods described below were used to measure the surface hardness, impact value, flexural modulus, friction coefficient µ in oil, oil leakage under extreme low oil pressure and the extent of self-wear and extent of counterpart material wear in the presence of contaminants, for each sample. The results are shown in Table 1.

### A. Resin

A-1. Nylon 6T/M-5T: HTN FE18502 (product of DuPont Corp.)
A-2. Nylon 9T: N1001A (product of Kuraray Co., Ltd.)
A-3. Nylon 66: A1030BRL (product of Unitika, Ltd.)
A-4. PPS: TORELINA A900 (product of Toray Co., Ltd.)

### B. Elastomer

B-1. Polyester-based elastomer: HYTREL (product of Toray-DuPont Co., Ltd.)
B-2. Polyester resin/acrylic rubber-based dynamically crosslinked resin: ETPV 90A01 NC010, Hardness Shore A87 (product of DuPont Corp.)

### C. Filler

C-1. Carbon fiber: HT C413 (product of Toho Tenax Co., Ltd.)
C-2. Glass fiber: MF06 JB1-20 (product of Asahi Fiber Glass Co., Ltd.)
C-3. Graphite: GA-50 (product of Nippon Techno-Carbon Co., Ltd.)

### (Comparative Examples 1 and 2)

Mixed pellets were obtained in the same manner as Example 2, except that PPS (Comparative Example 1) and PA (Comparative Example 2) were used instead of PPA, as shown in Table 1. The obtained pellets were subjected to injection molding under the same conditions as Example 2, to produce measuring samples. The same methods as in Example 2 were used to measure the surface hardness, impact value, flexural modulus, friction coefficient µ in oil, oil leakage under extreme low oil pressure and the extent of self-wear and extent of counterpart material wear in the presence of contaminants, for each sample. The results are shown in Table 1.
PPS and PEEK are commonly used as seal ring resins. However, because most thermoplastic elastomers have a lower thermal decomposition temperature than the melting point of PEEK and cannot be melt mixed with PEEK, they were excluded from the evaluation.

### (Measurement of surface hardness)

The durometer hardness was measured based on JIS K7215.

### (Measurement of impact value: Charpy impact strength, notched)

The Charpy impact strength was measured based on JIS K7077.

### (Measurement of flexural modulus)

The bending strength and bending strain were measured based on JIS K7171, and the flexural modulus was calculated. A sample left to stand under high humidity conditions with relative humidity of 80 to 85 %, as described below, was also measured for bending strength and bending strain in the same manner, and the flexural modulus was calculated.

### (Measurement of friction coefficient µ in oil and oil leakage under extreme low oil pressure)

The ring-shaped test pieces of Examples 1 to 5 and Comparative Examples 1 and 2 were each mounted on a shaft groove formed on the peripheral surface of an aluminum alloy die-cast (Si: 10 mass%) fixed shaft provided with a hydraulic circuit, as shown in Fig. 1, and installed in a test apparatus. Next, an aluminum alloy die-cast (Si: 10 mass%) housing was fitted thereon and rotated at a rotational speed of 2680 rpm (7.0 m/s), and the friction coefficient µ in oil was calculated from the rotational torque loss detected from a torque detector mounted on the test apparatus. The oil leakage was also measured at this time. The oil used was ATF, and measurement was conducted with an oil temperature of 120°C and variation in the oil pressure in stages from 0.1 to 2.0 MPa. The results are shown in Table 1. The oil leakage was expressed as a relative value with 100 as the oil leakage in Comparative Example 1.
Each ring-shaped test piece was also allowed to stand for 42 days (1000 hours) in a desiccator kept at room temperature (23°C), 80 to 85% relative humidity. After standing, the oil leakage was again measured by the method described above. The measurement results are shown in Table 1, as the oil leakage after standing.

### (Measurement of self-wear and counterpart material wear in the presence of contaminants)

The ring-shaped test pieces of Examples 1 to 5 and Comparative Examples 1 and 2 were each mounted on a test apparatus as shown in Fig. 1. A prescribed amount of contaminants was loaded into the oil pressure inlet and mixed with the ATF. The contaminants consisted of aluminum alloy die-cast shaving powder, and a metal filter was used to remove the coarse powder with sizes of 25 µm and greater. A pattern of raising the rotational speed from 0 to 1340 rpm (3.5 m/s) and the oil pressure from 0 to 2.0 MPa, conducting operation at 1340 rpm, 2.0 MPa for 2 hours, and then suspending operation for 15 minutes, was repeated for a period of 200 hours. After the test, the extent of wear of the ring, shaft and housing was measured. The results are shown in Table 1. The extent of wear was expressed as a relative value with 100 as the extent of wear in Comparative Example 1.

In Examples 1 to 5 which used PPA, the surface hardness was low at about 5 to 15% compared to Comparative Example 1 which used PPS, and the impact value was confirmed to have increased to 1.2 to 2.6 times that of Comparative Example 1. It was thus demonstrated that a resin composition of the invention containing flexible PPA and an elastomer is more flexible and has higher toughness, compared to a resin composition using hard PPS. When Examples 1 and 2 were compared, it was found that Example 2, which had a high proportion of elastomer with respect to the total of the PPA and elastomer, tended to have higher hardness and a higher impact value. In Example 5, the impact value was drastically higher than in the other examples, demonstrating that a dynamically crosslinked resin is effective for increasing the impact value of the resin composition, compared to common polyester-based elastomers.
On the other hand, the flexural modulus values in Examples 1 to 5 were lower than Comparative Example 1. In particular, the flexural modulus was low in Example 4 which used glass fibers instead of carbon fibers as the filler, the value being less than 1/2 that of the other examples. Also, the friction coefficient µ in oil for Examples 1 to 5 was confirmed to be lower than Comparative Example 1. This is presumably due to the self-lubricating effect of PPA.

The oil leakage under extreme low oil pressure in Examples 1 to 5 (before standing) was reduced to about 10 to 20% compared to Comparative Example 1. In Examples 1 to 5, the surface hardness and flexural modulus were lower compared to Comparative Example 1. This suggests that in the examples, the seal rings expanded in response to lower oil pressure, bonding more easily with the counterpart material, such that an excellent seal function was exhibited under extreme low oil pressure.
In Comparative Example 2 which used PA (nylon 66), neither the impact value nor flexural modulus were significantly different from the examples. In addition, the oil leakage under extreme low oil pressure before standing was greater than the examples but less than Comparative Example 1. However, allowing the sample of Comparative Example 2 to stand at high humidity resulted in an expanded volume, disappearance of the abutment joint gap (S1) and inability to accomplish fitting into the ring groove, and therefore further evaluation was discontinued. In Comparative Example 2, the flexural modulus was also drastically lowered after standing at high humidity, and changes in the physical properties due to water absorption were confirmed.
In Examples 1 to 5, on the other hand, the problems encountered in Comparative Example 2 did not occur even after standing at high humidity, and the oil leakage was also low under extreme low oil pressure, demonstrating that excellent sealing properties were maintained. This is presumably because the resin material of the invention containing PPA and an elastomer has low water absorbing properties, and undergoes essentially no volume expansion even at high humidity. In Examples 1 to 5, incidentally, virtually no change in flexural modulus was seen even after standing at high humidity.

As regards the extent of wear in the presence of contaminants for Examples 1 to 5, the extent of self-wear was reduced to about 5 to 25% and the extent of wear of counterpart materials was reduced to about 40 to 55%, compared to Comparative Example 1. This is thought to be due to the low friction coefficient µ in oil in Examples 1 to 5. Also, the large rate of reduction in the extent of wear of counterpart materials is believed to be due to the softness of the materials in the examples, whereby contaminants in the oil became engulfed in the materials, thereby suppressing aggressive wear. Under conditions without addition of contaminants, Example 2 which used nylon 6T/M-5T exhibited more excellent sliding properties than Example 3 which used nylon 9T.
In Comparative Example 2, the extent of wear in the presence of contaminants was increased compared to Comparative Example 1. In particular, the extent of self-wear was much greater, exceeding 150%. The cause for this is believed to be the low glass transition point and low dimensional stability of PA (nylon 66). On the other hand, wear of counterpart materials was also further increased over Comparative Example 1. The reason for the increased extent of wear of the counterpart material despite a lower surface hardness than Comparative Example 1, may be that in Comparative Example 2, the contaminants could not be engulfed to the interior of the material and therefore the counterpart material experienced wear more easily by rubbing of the contaminants.

**[Table 1]**

| | | Example 1 | Example 2 | Example 3 | Example 4 | Example 5 | Comp. Ex. 1 | Comp. Ex. 2 |
|---|---|---|---|---|---|---|---|---|
| A. Resin | A-1. PPA | 57 | 42 | | 42 | 42 | | |
| | A-2. PPA | | | 42 | | | | |
| | A-3. PA | | | | | | | 42 |
| | A-4. PPS | | | | | | 42 | |
| B. Elastomer or the like | B-1 | 14 | 29 | 29 | 29 | | 29 | 29 |
| | B-2 | | | | | 29 | | |
| C. Filler | C-1 | 21 | 21 | 21 | | 21 | 21 | 21 |
| | C-2 | | | | 29 | | | |
| | C-3 | 8 | 8 | 8 | 8 | 8 | 8 | 8 |
| Surface hardness (Durometer hardness) | | 73 | 65 | 65 | 67 | 68 | 77 | 74 |
| Impact value (Charpy impact strength) | | 12 | 15.2 | 14.5 | 15.1 | 25.7 | 10 | 13 |
| Flexural modulus (MPa) | Before standing | 10000 | 9910 | 9900 | 4600 | 9800 | 10800 | 9900 |
| | After standing | 10000 | 10000 | 10200 | 4500 | 9700 | 10790 | 3400 |
| Friction coefficient µ in oil | | 0.085 | 0.075 | 0.070 | 0.065 | 0.080 | 0.12 | 0.090 |
| Oil leakage (extremely low oil pressure) | Before standing | 91 | 84 | 84 | 87 | 88 | 100 | 96 |
| | After standing | 93 | 84 | 82 | 87 | 91 | - | NG |
| Wear amount in presence of contaminants | Self-wear | 95 | 87 | 82 | 75 | 90 | 100 | >150 |
| | Counterpart material wear | 62 | 45 | 51 | 58 | 58 | 100 | 110 |

### Industrial Applicability

The seal ring of the invention, which has injection moldability and excellent flexibility, can be applied to seal rings for non-stage transmissions (Continuously Variable Transmissions, or "CVT").

### Reference Signs List

1 Oil splash prevention cover
2 Housing
3 Shaft
4 Shaft groove
5 Evaluation ring
6 Drain hole
7 Switching valve
8 Leak release tube
9 Oil pressure inlet
10 Oil pressure outlet

## Claims

1. A seal ring made of a resin composition comprising (A) a poly(phthalamide) and (B) at least one component selected from among elastomers, crosslinked rubbers and dynamically crosslinked resins.

2. The seal ring according to claim 1, wherein said component (B) includes a dynamically crosslinked resin.

3. The seal ring according to claim 1 or 2, wherein the poly(phthalamide) is at least one selected from among polyhexamethylene terephthalamide/polyhexamethylene isophthalamide copolymer, polynonamethylene terephthalamide and polyhexamethylene terephthalamide/poly-2-methylpentamethylene terephthalamide copolymer.

4. The seal ring according to any one of claims 1 to 3, wherein the resin composition further comprises (C) at least one filler selected from among carbon fibers, glass fibers, alumina fibers, potassium titanate fibers, boron fibers, silicon carbide fibers, carbon nanotubes, montmorillonite, bentonite, talc, isinglass, mica, molybdenum disulfide, glass beads, graphite, fullerene, anthracite powder, aluminum oxide, titanium oxide, magnesium oxide, potassium titanate, boron nitride and PTFE powder.

5. The seal ring according to any one of claims 1 to 4, wherein the surface hardness of the seal ring is a durometer hardness of 60 to 75.
